# EUROPEAN PATENT APPLICATION

(11) **EP 4 782 279 A1**
(43) Date of publication of application: **29.07.2026**
(21) Application number: 24882360.1
(22) Date of filing: 21.10.2024
(51) Int. Cl.: B60R 1/26

(54) **DIGITAL SIDE MIRROR STRUCTURE**

(30) Priority: 27.10.2023 JP 2023184627
(71) Applicant: Mitsubishi Fuso Truck and Bus Corporation, Nakahara-ku, Kawasaki-shi Kanagawa 2118522 (JP)
(72) Inventor: TAKAHASHI, Hisashi, Kawasaki-shi, Kanagawa 211-8522 (JP); PATANKAR, Yashavardhan, Kawasaki-shi, Kanagawa 211-8522 (JP); PATEL, Tanay, Kawasaki-shi, Kanagawa 211-8522 (JP)
(74) Representative: Hofstetter, Schurack & Partner
(86) International application number: PCT/JP2024/037465
(87) International publication number: WO 2025/089247

(57) **Abstract**

The digital side mirror structure (10) includes a first digital side mirror (10R) arranged at a side of the driver's seat and a second digital side mirror (10L) arranged at a side of the navigator's seat. The first digital side mirror (10R) includes the first horizontal stay unit (13R) extending to the right from the cab (3), a first vertical stay unit (14R), and a first mount unit (12R). The second digital side mirror (10L) includes a protruding unit 15 extending forward from the cab (3), a second horizontal stay unit (13L) extending to the left from the front end portion of the protruding unit (15), a second vertical stay unit (14L), and a first mount unit (12L). The second digital side mirror (10L) is formed so as to look like symmetrical to the first digital side mirror (10R) in the front view.

## Description

### [Technical Field]

The present disclosure relates to a digital side mirror structure using an electronic photographing device installed on a vehicle.

### [Background Art]

Advance of vehicle technology accompanies a spread of technique that recognizes the presence of an object inside or outside a vehicle, such as a van, a truck, and a bus, with a camera or a radar, for example, and causes a device installed in the vehicle to function on the basis of the recognized information.

For example, PTL 1 describes an electronic side mirror device (digital side mirror) that is a side mirror using a digital camera. The electronic side mirror device includes a door camera that photographs the side of the vehicle at the outer side of the front end of the door of the vehicle. This electronic side mirror device projects an image photographed by the door camera onto a holographic optical device arranged on a windshield or a side window by a projector device.

### [Citation List]

### [Patent Literature]

[PTL 1]
JP2011-213186 A

### [Summary of Invention]

### [Technical Problem]

Side mirrors used in, for example, trucks, tend to be large in size and are susceptible to running wind. This is one of the causes of noise (wind noise) and deterioration in fuel efficiency. From the viewpoints of suppressing noise and improving fuel efficiency, it is effective for trucks and the like to use digital side mirrors that can easily reduce their sizes as compared with a side mirror.

A cab-over car, such as a truck and a minivan, which is not provided with a hood in front of the cab and accordingly arranges the engine room under the front seat, tends to be difficult to see the lower portion in front of the cab from driver's seat. In particular, an area in front of the navigator's seat and a lower side area of the navigator's seat are difficult to be seen.

From the above, when digital side mirrors are to be mounted on a cab-over vehicle such as a truck, it is desirable to set the respective photographing areas to include the side of the driver 's seat and the side of the navigator's seat side of the cab. In addition, a camera used for the digital side mirror may set the inside of the vehicle to a photographing area for the purpose of monitoring the driver as well as photographing the outside of the vehicle. In order to set the positions of the cameras so as to satisfy the various photographing areas as described above, it is conceivable that the configuration of the digital side mirror is different between the side of the driver's seat the side of the navigator's seat.

However, if the configuration of the digital side mirror on the side of the driver's seat is made different from that of the side of the navigator's seat, turbulence in air resistance is likely to occur. In particular, it is concerned that such a configuration may cause an adverse effect during high-speed driving.

As described above, the conventional technique has a room for improvement in achieving both securing of the photographing area of each camera used for the digital side mirror and enhancing of aerodynamics.

The present disclosure has been devised in view of such a problem and one of objects thereof is to be able to provide a digital side mirror structure that can achieve both securing of the photographing area of each camera used for the digital side mirror and enhancing of aerodynamics.

### [Solution to Problem]

The present disclosure solves at least a part of the above problem can be embodied in the following aspects or application examples.

(1) A digital side mirror structure according to the present application example is arranged in front of a driver's seat and on a body of a vehicle and includes a first digital side mirror arranged at a side of the driver's seat serving as a first side of a vehicle width direction; and a second digital side mirror arranged at a side of the navigator's seat serving as a second side of the vehicle width direction.

The first digital side mirror includes a first horizontal stay unit extending outward of the vehicle width direction from the first side of the vehicle width direction at an upper edge portion of a front panel arranged under a windshield on a front face portion of the body, a first vertical stay unit arranged upward from a tip end portion of the first horizontal stay unit, and a first mount unit being connected to an upper end portion of the first vertical stay unit and holding a first electronic photographing device that photographs a first photographing area including a vehicle periphery at the first side of the vehicle width direction.

The second digital side mirror includes a protruding unit extending forward of the vehicle from the second side of the vehicle width direction at the upper edge portion of the front panel on the front face portion of the body, a second horizontal stay unit extending outward of the vehicle width direction from a front end portion of the protruding unit, a second vertical stay unit arranged upward from a tip end portion of the second horizontal stay unit, a second mount unit being connected to an upper end portion of the second vertical stay unit and holding a second electronic photographing device that photographs a second photographing area including a vehicle periphery at the second side of the vehicle width direction.

The protruding unit, the second horizontal stay unit, the second vertical stay unit and the second mount unit of the second digital side mirror are formed to look like symmetrical to the first horizontal stay unit, the first vertical stay unit and the second mount unit of the first digital side mirror in a front view.

According to digital side mirror structure, the first digital side mirror extends outward of the vehicle width direction from the body at the first horizontal stay unit, whereas the second digital side mirror protrudes forward from the body at the protruding unit and then extends outward in width direction at the second horizontal stay unit. As the above, the second digital side mirror, which extends forward from the body, easily includes the lower portions of the front side portion and the side portion of the body in the second photographing area.

Since the second digital side mirror is formed so as to look like symmetrical to the first digital side mirror in the front view, air resistance disturbances are less likely to occur in the second digital side mirror and the first digital side mirror. Therefore, it is possible to enhance aerodynamics. In particular, it is possible to enhance aerodynamics when the vehicle travels straight forward.

Therefore, according to this digital side mirror structure, it is possible to achieve both of securing of the photographing area of each camera used for the digital side mirror and enhancing of aerodynamics.

(2) In the digital side mirror structure of the present application example, the first horizontal stay unit may have a cross section intersecting with an extending direction thereof, the cross section having an upper face forming a first inclined face inclined upward from a front end to a rear end along a vehicle front-rear direction, the protruding unit may have a cross section intersecting with an extending direction thereof, the cross section having an upper face forming a second inclined face inclined upward from an inside of the vehicle to an outside of the vehicle along the vehicle width direction, and the second horizontal stay unit may have a cross section intersecting with an extending direction thereof, the cross section having an upper face forming an inclined face similar to the first incline face.

With this configuration, the cross section of the first horizontal stay unit and the cross section of the protruding unit each has a structure that forms an inclined face, so that the aerodynamic can be further enhanced. This configuration can suppress the noise, such as the wind noise during traveling and enhance the fuel efficiency.

(3) In the digital side mirror structure of the present application example, the first mount unit and the second mount unit may be detachably connected to the respective upper end portions of the first vertical stay unit and the second vertical stay unit, respectively.

When the first electronic photographing device or the second electronic photographing device is to be replaced due to, for example, a failure, the first mount unit or the second mount unit can be easily replaced.

(4) In the digital side mirror structure of the present application example, connecting portions between the first mount unit and the upper end portion of the first vertical stay unit and between the second mount unit and the upper end portion of the second vertical stay unit may include mechanical connecting mechanisms that mechanically connect the first mount unit and the second mount unit to the respective corresponding upper end portions, and electrical connecting mechanisms that transmit image information that the first electronic photographing device and the second photographing device photograph to an entity in the vehicle.

In this case, since the first electronic photographing device or the second electronic photographing device can be electrically connected only by the mechanical connection the first mount unit or the second mount unit, the connection operation is facilitated.

(5) In the digital side mirror structure of the present application example, the first photographing device may photograph the first photographing area including a front side and a rear side of the vehicle on the first side of the vehicle width direction and the driver's seat, and the second photographing device may photograph the second photographing area including a front side and a rear side of the vehicle on the second side of the vehicle width direction, a portion under the front face portion of the body and the driver's seat.

This structure makes it possible to sufficiently secure the photographing area including the inner side and the outer side of the vehicle and the lower portion of the body front portion.

According to the digital side mirror structure of the present case, it is possible to enhance the aerodynamics while the vehicle is traveling straight toward, securing the photographing areas.

### [Advantageous Effects of Invention]

According to the present disclosure, securing of the photographing area of each camera used for the digital side mirror and enhancing of aerodynamics can be both achieved.

### [Brief Description of Drawings]

[FIG. 1]

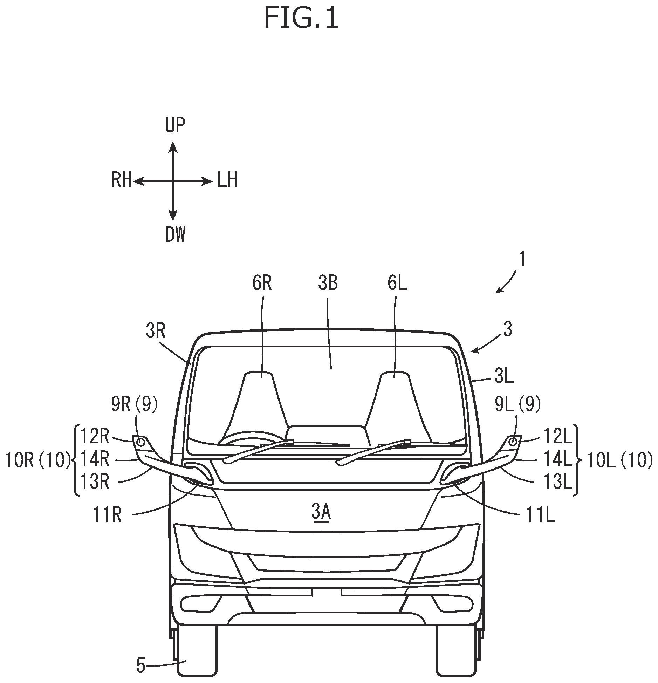

   FIG. 1 is a front view of a truck adopting a digital side mirror structure according to an application example.
[FIG. 2]

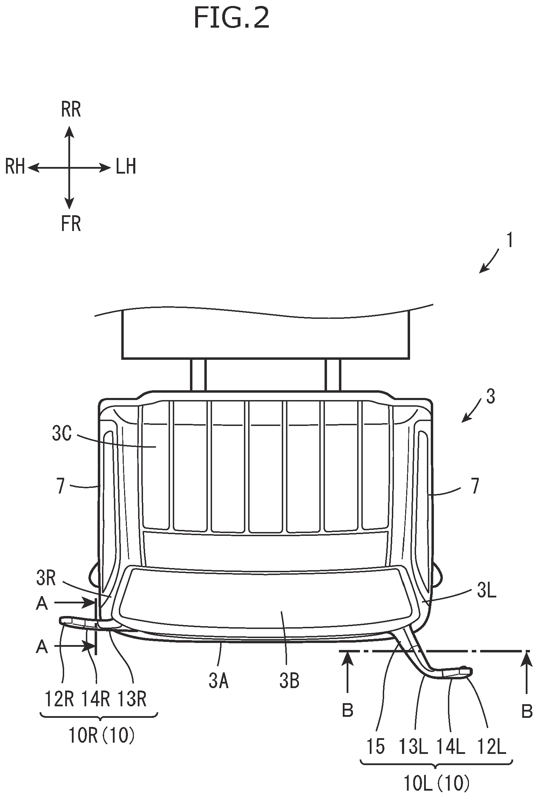

   FIG. 2 is a plan view of the truck of FIG. 1 seen from above.
[FIG. 3]

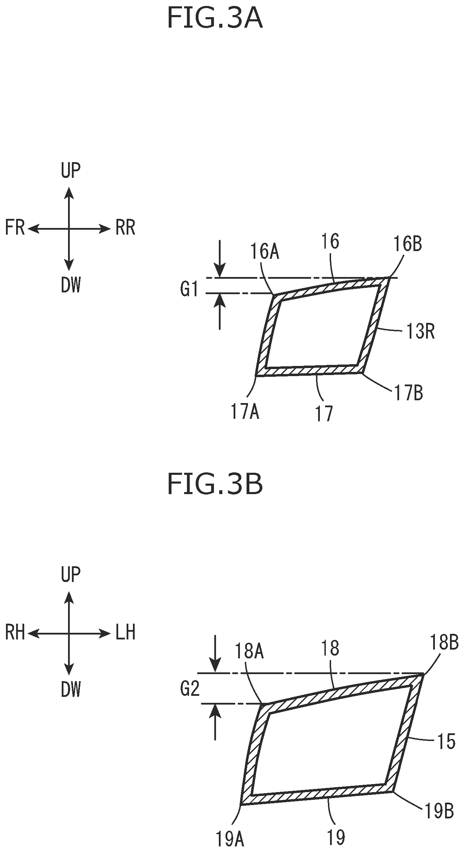

   FIG. 3A is a cross sectional view of a first horizontal stay unit cut along Line A-A, and FIG. 3B is a cross sectional view of a protruding unit cut along Line B-B.
[FIG. 4]

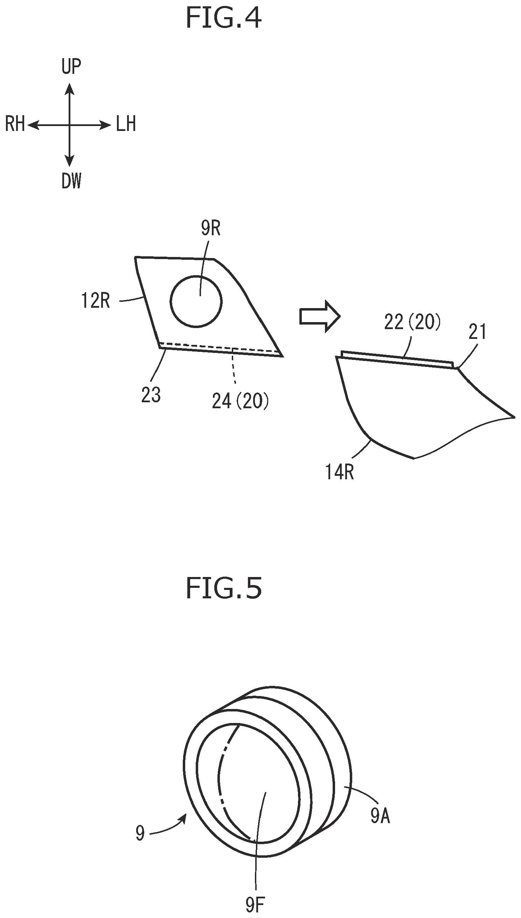

   FIG. 4 is a diagram showing a connecting structure of a first mount unit and a first vertical stay unit.
[FIG. 5]
   FIG. 5 is a perspective view of a 360-degree camera used as a camera.
[FIG. 6]

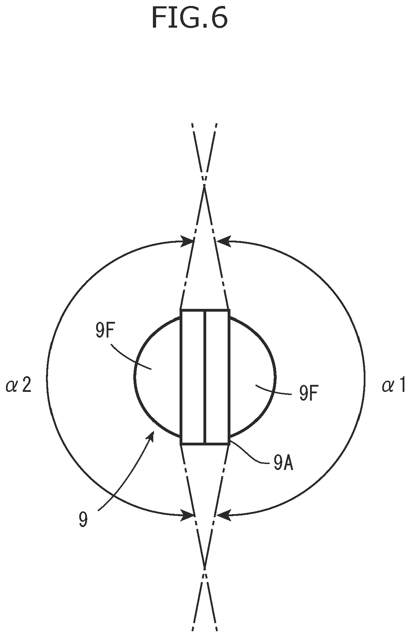

   FIG. 6 is a diagram showing a photographing region of the 360-degree camera of FIG. 5.

### [Description of Embodiments]

With reference to the drawings, an embodiment of the present disclosrue will now be described. The following embodiment is merely illustrative and are not intended to exclude the application of various modifications and techniques not explicitly described in the following embodiment. Each configuration of the embodiment can be variously modified and implemented without departing from the gist thereof. Also, each configuration can be selected or omitted according to the requirement, or can be combined appropriately.

Hereinafter, the front-rear direction of a vehicle adopting a digital side mirror structure of a vehicle according to the present embodiment is also referred to as the vehicle length direction, and the left-right direction of the vehicle is also referred to as the vehicle width direction. A vertical direction orthogonal to both the front-rear direction and the left-right direction is also referred to as a vehicle height direction. The left-right direction is determined on the basis of the posture facing the front of the vehicle. In the drawings, the front is indicated by "FR", the rear is indicated by "RR", the left is indicated by "LH", the right is indicated by "RH", the upward is indicated by "UP", and the downward is indicated by "DW". In addition, the interior space (cab room) side of the vehicle is referred to as "inside" or "inward", and the opposite side to the inside is referred to as "outside" or "outward" of the vehicle.

### 1. Configuration

FIG. 1 is a diagram illustrating a truck 1 (vehicle) equipped with a digital side mirror structure 10 according to the present embodiment and is a front view as the truck 1 is viewed from the front, and FIG. 2 is a plan view of the truck 1 of FIG. 1 as viewed from above.

First, description will now be made in relation to the truck 1 equipped with the digital side mirror structure 10.

As shown in FIGs. 1 and 2, the truck 1 is an example of the vehicle provided with the digital side mirror structure 10, is a vehicle not having a hood in front of a cab 3, i.e., a so-called cab-over vehicle.

The truck 1 includes the cab 3 provided on a front portion of a frame (not shown) forming a skeleton of the body, and a cargo box (not shown) mounted behind the cab 3. In addition, wheels 5 is provided at a lower portion of the frame via a suspension mechanism (not shown). The cab 3 is a part arranged on the front portion of the body of the truck 1.

The cab 3 includes a front panel 3A on the front face and front pillars 3L,3R on the left and right sides of the front panel 3A, and a windshield 3B provided between the left and right front pillars 3L,3R. It can be said that the front panel 3A is arranged under the windshield 3B. The front panel 3A, the front pillars 3L,3R and the windshield 3B collectively form the front face portion of the cab 3. On the upper face of the cab 3, a roof panel 3C is provided.

Inside the cab 3, an interior space (vehicle interior, cab room) including a driver's seat 6R and a navigator's seat 6L are provided. The inside of cab 3 is a space surrounded by panels (including the front panel 3A, the front pillars 3L,3R, the windshield 3B, and the roof panel 3C described above) that form the appearance of the cab 3.

In FIGs. 1 and 2, the driver's seat 6R is arranged on the right side of the vehicle and the navigator's seat 6L is arranged on the left side of the vehicle. In addition, on the both left and right sides of the cab 3, doors 7 are provide which close openings serving as the entrances/exits of the cab 3.

On the front side of the cab 3 (body) of this truck 1, digital side mirror structures 10 (10L,10R) are provided. The digital side mirror structures 10 (10L,10R) are each an electronic side mirror that photographs the inside or the outside of the truck 1 with an on-board camera ("camera") 9L,9R provided at the tip end thereof, displays the image on a monitor device (not shown) in cab 3 to allow a driver (an passenger or a driver) to confirm the image.

These digital side mirror structures 10 (10L,10R) are specifically a first digital side mirror 10R arranged at a side (on the right, a first side of the vehicle width direction) of the driver's seat 6R and a second digital side mirror 10L arranged at a side (on the left, a second side of the vehicle width direction) of the navigator's seat 6L. The first digital side mirror 10R and the second digital side mirror 10L are camera stays for holding the cameras 9L,9R at respective predetermined positions, and are each formed by coating a rod-shaped core member (not shown) with a resin-made casing member. This means that the exteriors of the first digital side mirror 10R and the second digital side mirror 10L are formed of resin-made casing members.

As shown in FIG. 1, the first digital side mirror 10R on the side of the driver's seat 6R and the second digital side mirror 10L on the side of the navigator's seat 6L are spaced apart from each other on both sides (left and right) of the vehicle width direction in the front face portion of the cab 3, and are arranged at a substantially center height in the vehicle height direction. Specifically, for the first digital side mirror 10R and second digital side mirror 10L shown in FIG. 1, base units 11L,11R for attaching the structures to the cab 3 are set in an upper edge portion of the front panel 3A under both the left and right sides of the windshield 3B.

The first digital side mirror 10R is attached to the cab 3 in a posture extending to the right (outward of the vehicle width direction) from the base unit 11R in the front view. In the first digital side mirror 10R, the tip portion 12R positioned on the right end serves as a mount unit (first mount unit 12R) that holds the camera 9R.

The first mount unit 12R does not overlap the front face portion of the cab 3 in the front view, and is provided at a position extending to the right (outward in the vehicle width direction) further than the cab 3.

The second digital side mirror 10L is attached to the cab 3 in a posture extending to the left (outward of the vehicle width direction) from the base unit 11L in the front view. In the second digital side mirror 10L, the tip portion 12L on the left end serves as a mount unit (second mount unit 12R) that holds the camera 9L.

The second mount unit 12L does not overlap the front face portion of the cab 3 in the front view, and is provided at a position extending to the left (outward in the vehicle width direction) further than the cab 3.

As shown in FIG. 1, the first digital side mirror 10R and the second digital side mirror 10L are provided so as to extend to the right and the left of the cab 3 from positions at the same height, and are symmetrical to each other in the front view.

The shapes of the first digital side mirror 10R and the second digital side mirror 10L are asymmetrical when first digital side mirror 10R and second digital side mirror 10L are viewed from above.

Specifically, as shown in FIG. 2, the first digital side mirror 10R extends to the right in a substantially straight posture from the cab 3 in the top view whereas the second digital side mirror 10L has a bent shape formed of a portion protruding forward from the cab 3 and a portion extending to the left in a posture along the vehicle width direction in the top view.

Next, detailed description will now be made in relation to the configuration of the first digital side mirror 10R and the second digital side mirror 10L.

The first digital side mirror 10R includes a first horizontal stay unit 13R, a first vertical stay unit 14R, and a first mount unit 12R. The second digital side mirror 10L includes a protruding unit 15, a second horizontal stay unit 13L, a second vertical stay unit 14L, and a second mount unit 12L.

The first digital side mirror 10R will now be described.

In the first digital side mirror 10R, the first horizontal stay unit 13R is a root portion attached to the base unit 11R of the cab 3, and extends to the right (outward of the vehicle width direction) from the base unit 11R. This means that the first horizontal stay unit 13R is a portion extending to the right (outward of the vehicle width direction) from the base unit 11R positioned at the right side (first side of the vehicle width direction) of the upper edge portion of the front panel 3A. The first horizontal stay unit 13R shown in FIG. 1 is inclined slightly upward from the base unit 11R to the right (outward of the vehicle width).

The first vertical stay unit 14R is a portion that is provided upward from the right end (tip end portion) of the first horizontal stay unit 13R and that connects the first horizontal stay unit 13R to the first mount unit 12R.

The first mount unit 12R is connected to the upper end portion of this first vertical stay unit 14R. As described above, the first mount unit 12R is a portion that holds the camera 9R (first electronic photographing device). The first mount unit 12R of FIG. 1 is formed in a substantially trapezoidal shape in the front view.

The first horizontal stay unit 13R, first vertical stay unit 14R, and the first mount unit 12R collectively form the first digital side mirror 10R into a rod shape extending from the base unit 11R (cab 3) to the right (outward of the vehicle width direction) in a posture slightly inclined upward and then being bent upward at the right end (tip end).

The first horizontal stay unit 13R and the first vertical stay unit 14R are integrally formed, but the first mount unit 12R is detachably connected to the upper end portion of the first vertical stay unit 14R.

Next, the second digital side mirror 10L will now be described.

In the second digital side mirror 10L, the protruding unit 15 is a root portion attached to the base unit 11L of the cab 3, and protrudes forward from the base unit 11L. This means that the protruding unit 15 is a portion extending forward from the base unit 11L positioned at the left side (second side of the vehicle width direction) of the upper edge portion of the front panel 3A. The protruding unit 15 protrudes slightly diagonally forward left of the truck 1 (UP and LH in FIG. 1, FR and LH in FIG. 2).

The second horizontal stay unit 13L is a portion extending to the left (outward of the vehicle width direction) from the front end portion of the protruding unit 15. The second vertical stay unit 14L is a portion that is provided upward from the left end (tip end portion) of the second horizontal stay unit 13L and that connects the second horizontal stay unit 13L to the second mount unit 12L.

The second mount unit 12L is connected to the upper end portion of this second vertical stay unit 14L. As described above, the second mount unit 12L is a portion that holds the camera 9L (second electronic photographing device). The second mount unit 12L of FIG. 1 is formed in a substantially trapezoidal shape symmetrical to the first mount unit 12R in the front view.

The protruding unit 15, the second horizontal stay unit 13L, the second vertical stay unit 14L, and the second mount unit 12L collectively form the second digital side mirror 10L into a rod shape extending from the base unit 11L (cab 3) to the left (outward of the vehicle width direction) in a posture slightly inclined upward and then being bent upward at the right end (tip end). Thereby, the protruding unit 15 and the second horizontal stay unit 13L are configured to look the same as the first horizontal stay unit 13R in the front view. It can be said that this second digital side mirror 10L is an L-shaped member protruding forward of the cab 3 at the position of the protruding unit 15 and then bending to the left (outward of the vehicle width direction) at the second horizontal stay unit 13L in the top view shown in FIG. 2.

The protruding unit 15, the second horizontal stay unit 13L and the second vertical stay unit 14L are integrally formed, but the second mount unit 12L is detachably connected to the upper end portion of the second vertical stay unit 14L.

The second digital side mirror 10L may provide a foldable structure to the protruding unit 15. Specifically, the protruding unit 15 may be provided with a hinge structure serving as a pivot axis to fold the tip-end side of the second digital side mirror 10L rearward with respect to the base unit 11L of the second digital side mirror 10L along the horizontal plane. For this foldable structure, the casing member that forms the exterior of the protruding unit 15 is formed with a folding cut. The width of the cut (gap) is preferably as narrow as possible from the viewpoint of ensuring an appearance. The first digital side mirror 10R may also have a similar foldable structure. The foldable structure can be provided on the first horizontal stay unit 13R.

It is preferable that the appearances of the first digital side mirror 10R and the second digital side mirror 10L are symmetrical (looks like symmetrical) in the front view as described above and also formed into shapes that can suppress the air-resistance while the truck 1 is traveling. For this purpose, the first horizontal stay unit 13R of the first digital side mirror 10R and the protruding unit 15 and the second horizontal stay unit 13L of the second digital side mirror 10L of the present embodiment have cross-sectional shapes to be described below.

FIG. 3A shows an example of the cross-sectional shape of the first horizontal stay unit 13R and is a cross-sectional view of the first horizontal stay unit 13R cut at a face along a Line A-A (FIG. 2) of FIG. 2. FIG. 3B shows an example of the cross-sectional shape of the protruding unit 15 and is a cross-sectional view of the protruding unit 15 cut at a face along a Line B-B of FIG. 2.

The cross section of the first horizontal stay unit 13R shown in FIG. 3A is one obtained by cutting the first horizontal stay unit 13R by a cutting face extending in the vehicle height direction (up-down direction) and the front-rear direction, and can be said to be a cross section intersecting with the vehicle width direction, which is the extending direction of the first horizontal stay unit 13R.

On the other hand, the cross section of the protruding unit 15 shown in FIG. 3A is one obtained by cutting the protruding unit 15 by a cutting face extending in the vehicle height direction (up-down direction) and the left-rear direction (vehicle width direction), and can be said to be a cross section intersecting with the front-rear direction, which is the extending direction of the protruding unit 15.

As shown in FIG. 3A, the first horizontal stay unit 13R is formed into a shape having the cross section the upper face 16 positioned on the top of which forms an inclined face (first inclined face) inclined upward from a front end 16A to a rear end 16B along the front-rear direction (vehicle front-rear direction). The height difference G1 between the front end 16A and the rear end 16B can be appropriately set in view of enhancement of the aerodynamics.

Furthermore, in the cross section of the first horizontal stay unit 13R, the height (vertical position) of a rear end 17B of a lower face 17 positioned on the bottom of the cross section is set to be equal to or higher than the height of a front end 17A of lower face 17. In the first horizontal stay unit 13R illustrated in FIG. 3A, the rear end 17B of the lower face 17 is arranged at the substantially same height as the front end 17A of lower face 17. With this configuration, since, in the front view of the first horizontal stay unit 13R, the rear end 17B overlaps the front end 17A, the appearance as viewed from the front can be ensured and the aerodynamics on the side of the lower face 17 can be enhanced.

As shown in FIG. 3B, the protruding unit 15 is formed into a shape having a cross section the upper face positioned on the top of which forms an inclined face (second inclined face) inclined upward from an inner end 18A on the inner side of the vehicle to an outer end 18B on the outer side of the vehicle along the vehicle width direction.

The second horizontal stay unit 13L has a cross-sectional shape similar to that of the first horizontal stay unit 13R.

In other words, the cross section of the second horizontal stay unit 13L cut along a face extending both in the vehicle height direction and the front-rear direction (i.e., the cross section intersecting with the vehicle width direction corresponding to the extending direction of the second horizontal stay unit 13L) is formed to have the upper face positioned on the top in an inclined face that is inclined upward from the front end to the rear end along the vehicle front-rear direction similarly to the first inclined face.

Since the upper face 18 of the protruding unit 15 and the upper surface of the second horizontal stay unit 13L are formed into the above inclined faces, the front view of the appearance of the protruding unit 15 and the second horizontal stay unit 13L look like symmetrical to the appearance of the first horizontal stay unit 13R, which is an appearance that is inclined sightly upward to the right (outward of the vehicle width direction). In addition, the upper face 18 of the protruding unit 15 and the upper face of the second horizontal stay unit 13L formed into the inclined faces can enhance the aerodynamics.

In addition, the height (vertical position) of the outer end 19B of the lower face 19 the protruding unit 15 is set equal to or higher than the height of the inner end 19A of the lower face 19. In the protruding unit 15 shown in FIG. 3B, outer end 19B is disposed at a position higher than inner end 19A, and lower face 19 gradient forms an upwardly inclined surface from inner end 19A toward outer end 19B. This is one of the improvements to make the appearance of the protruding unit 15 look line symmetrical with the appearance of the first horizontal stay unit 13R in the front view. The height difference G2 between the inner end 19A and the outer end 19B can be appropriately set in view of the appearance of the front view of the protruding unit 15 and the appearance of the front view of the first horizontal stay unit 13R.

FIG. 4 is a diagram showing a connecting portion 20 between the first vertical stay unit 14R and the first mount unit 12R of the first digital side mirror 10R and illustrates a state where the first vertical stay unit 14R and the first mount unit 12R are separated from each other.

As shown in FIG. 4, on the upper end portion 21 of the first vertical stay unit 14R, a protruding portion 22 for connection that protrudes along the vehicle width is formed. On the lower end portion 23 of the first mount unit 12R, a groove-shaped recessed portion 24 that engages the protruding portion 22 is formed along the vehicle width direction. The first vertical stay unit 14R can be mechanically connected to the first mount unit 12R by sliding the recessed portion 24 of the first mount unit 12R along the protruding portion 22 at the upper end portion 21 of the first vertical stay unit 14R (along the direction indicated by the open arrow in the drawing) to engage the recessed portion 24 with the protruding portion 22.

In addition, the connecting portion between the second vertical stay unit 14L and the second mount unit 12L have the same shape as the connecting portion 20 between the first vertical stay unit 14R and the first mount unit 12R, so detailed description thereof is omitted here. The connecting portions formed into the same shape allows the first mount unit 12R and the first mount unit 12L that are to be used to have the same shape.

In the recessed portion 24 of the first mount unit 12R, a terminal (not shown) that is to be connected to a harness that transmits an electric signal (including image data) from the camera 9R is incorporated. In addition, in the protruding portion 22 of the first vertical stay unit 14R, a terminal (not shown) that is to be connected to a harness that transmits an electric signal (including image data) from the camera 9R to an electric control device (not shown) mounted on the truck 1. With this structure, by simply mechanically connecting the protruding portion 22 to the recessed portion 24, the camera 9R held at the first mount unit 12R can be electrically connected to the electric control device of the truck 1. The electric control device is an electronic device that performs overall control of the cameras 9 and display-control of image data, for example.

This means that the connecting portion 20 functions as both a mechanical connecting mechanism and an electrical connecting mechanism between the first vertical stay unit 14R and the first mount unit 12R.

The connecting portion between the second vertical stay unit 14L and the second mount unit 12L in the second digital side mirror 10L is configured the same as the connecting portion 20 of the first digital side mirror 10R as described above, except that the connecting portions are symmetrical to each other. Here, if the first mount unit 12R and the second mount unit 12L are formed to be symmetrical with respect to both the left-right direction and the front-rear direction, the first mount unit 12R and the second mount unit 12L can be each attached to both first digital side mirror 10R and second digital side mirror 10L irrespective of the left and right sides. This increases the versatility of the components and contributes to cost-reduction.

Next, description will now be made in relation to the camera 9R,9L held in the first mount unit 12R and the second mount unit 12L. The cameras 9L,9R are electronic photographing devices capable of photographing the inside or the outside of the truck 1. Throughout the specification, the phrase "capable of photographing the inside or the outside of the truck 1" means that at least one of the inside and the outside of the truck 1 can be photographed.

Specifically, the photographing area (first photographing area) of the camera 9R at the side of the driver's seat 6R (right side) is set to an area from the outer right front side to the outer right rear side of the truck 1 and a driver seated on the driver's seat 6R inside the cab 3. The photographing area (second photographing area) of the camera 9L at the side of the navigator's seat 6L (left side) is set to an area from the outer left front side to the outer left rear side of the truck 1 and a driver seated on the driver's seat 6R inside the cab 3, and a portion under the front face portion of the cab 3. Since the second mount unit 12L protrudes forward of the cab 3 as described above, the portions under the front face portion and the side portion of the cab 3 can be included in the photographing area of the camera 9L.

In the present embodiment, 360-degree cameras are provided as the cameras 9L,9R. To the cameras 9L,9R, which are 360-degree cameras, spherical cameras that have photographing ranges of all 360 degrees are applied. If there is no need to discriminate the left and right cameras 9L, 9R from each other in the following description, each of the left and right cameras 9L, 9R is referred to as "camera 9".

As shown in FIGs. 5 and 6, for example, the camera 9, which is a 360-degree camera, has a configuration that enables 360-degree photographing by mounting two lenses 9F each on one of the sides (e.g., the vehicle front side) and the other side (the vehicle rear side) of a casing 9A, capturing a subject with each lens 9F on one side (180 degrees+d, indicated by the angles α1 and α2 in FIG. 6), and synthesizing the two images. Each camera 9 includes a photographing device that photographs a subject that the each lens 9F captures and converts the photographed subject into image data in the form of an analog-electric signal, and an image-processing circuit that digitizes the image data converted by the photographing device. The photographing device and the image-processing circuit do not appear in FIGs. 1 and 2. The above-described configuration of the camera 9 is exemplary, and is not limited thereto.

### 2. Action and Effect

The digital side mirror structure 10 according to the present embodiment described above brings the following actions and effects.

According to digital side mirror structure 10 of this application example, the first digital side mirror 10R extends outward (to the right) of the vehicle width direction from the cab 3 at the first horizontal stay unit 13R, whereas the second digital side mirror 10L protrudes forward from the body at the protruding unit 15 and then extends outward in width direction (to the left) at the second horizontal stay unit 13L. As described above, since the second digital side mirror 10L protrudes forward from the body (cab 3), the photographing area (second photographing area) of the camera 9L easily includes the portions under the front face portion and the side portion of the body of the truck 1.

In addition, since the second digital side mirror 10L is formed so as to look like symmetrical to the first digital side mirror 10R in the front view, air resistance disturbances are less likely to occur in the second digital side mirror 10L and the first digital side mirror 10R. Therefore, it is possible to enhance aerodynamics. In particular, it is possible to enhance aerodynamics when the truck 1 travels straight forward.

Therefore, according to this digital side mirror structure 10, it is possible to achieve both of securing of the photographing areas of the cameras 9L, 9R used for the digital side mirrors 10L,10R and enhancing of aerodynamics.

Besides, the first horizontal stay unit 13R has a cross section intersecting with an extending direction thereof the upper face 16 of which is formed of the first inclined face inclined upward from the front end 16A to the rear end 16B along the vehicle front-rear direction. The protruding unit 15 has a cross section intersecting with an extending direction thereof the upper face 18 of which is formed of the second inclined face inclined upward from an inside of the vehicle to an outside of the vehicle along the vehicle width direction. The second horizontal stay unit 13L has the upper face of the cross section intersecting with the extending direction thereof forms an inclined face the same in shape of the first inclined face.

As described above, since the cross section of the first horizontal stay unit 13R and the cross section of the protruding unit 15 and the second horizontal stay unit 13L each has a structure that forms the above-described inclined face, the aerodynamic can be further enhanced. This configuration can suppress the noise, such as the wind noise, during traveling and improve the fuel efficiency. In addition, the first horizontal stay unit 13R looks like to be symmetrical to the protruding unit 15 and the second horizontal stay unit 13L in the front view.

Further, since the first mount unit 12R and the second mount unit 12L are detachably connected to the upper end portion 21 of the first vertical stay unit 14R and the upper end portion of the second vertical stay unit 14L, respectively, the first mount unit 12R or the second mount unit 12L can be easily replaced when the camera 9R or 9L is to be replaced due to, for example, a failure.

Furthermore, since the connecting portion 20 between the first mount unit 12R and the first vertical stay unit 14R and the connecting portion between the second mount unit 12L and the second vertical stay unit 14L each serves as both the mechanical connecting mechanism and the electrical connecting mechanism, the cameras 9R,9L can be electrically connected only by the mechanical connection between the first mount unit 12R and the first vertical stay unit 14R and between the second mount unit 12L and the second vertical stay unit 14L, which facilitates connecting operation.

In addition, the camera 9R by the side of the driver 's seat 6R (right side) photographs a photographing area (first photographing area) including the outer right front side and the outer right rear side (including the right side) of the truck 1 and a driver seated on the driver 's seat 6R inside the cab 3, and the camera 9L by the side of the navigator 's seat 6L (left side) photographs a photographing area (second photographing area) including the outer left front side and the outer left rear side (including the left side) of the truck 1, the driver seated on the driver 's seat 6R inside the cab 3, and a portion under the front face portion of the cab 3.

This structure can sufficiently secure the photographing area including a portion under the front face portion of the cab 3 and the inner side of the cab 3.

### 3. Miscellaneous

The digital side mirror structure 10 is not limited to one described above.

Alternatively, the first mount unit 12R and the second mount unit 12L do not have to be formed symmetrically to each other with respect to the left-right direction and the front-rear direction and do not have to be detachable. In addition, the appearance shapes of the first digital side mirror 10R and the second digital side mirror 10L, such as the cross sections of the first horizontal stay unit 13R and the protruding unit 15 are not limited to ones illustrated in the drawings as far as the first digital side mirror 10R and the second digital side mirror 10L are symmetrical to each other in the front view.

In addition, although the driver's seat 6R is assumed to be provided on the right side of the truck 1, alternatively, the driver 's seat may be provided on the left side and the navigator's seat may be provided on the right side. In this alternative, the first digital side mirror 10R including the first mount unit is arranged on the left side of the cab 3 (at the side of the driver's seat), and the second digital side mirror 10L including the second mount unit is arranged on the right side of the cab 3 (at the side of the navigator's seat).

A vehicle adopting the digital side mirror structure 10 is not limited to the truck 1 and may alternatively be a minivan, for example. In a cab-over vehicle, such as a truck and a minivan, that is not provided with a hood in front of the cab and accordingly arranges the engine room under the front seat, a portion under the front portion and the side portion of the cab at side of the navigator's seat is likely to be blind spots when viewed from the driver's seat, it is significant to provide the second digital side mirror 10L at the side of the navigator's seat so that the portion under the front portion and the side portion of the can be checked.

Appendices of the present invention will now be disclosed below.

### [Appendix 1]

A digital side mirror structure, arranged in front of a driver's seat and on a body of a vehicle, comprising
a first digital side mirror arranged at a side of the driver's seat serving as a first side of a vehicle width direction; and
a second digital side mirror arranged at a side of the navigator's seat serving as a second side of the vehicle width direction, wherein
the first digital side mirror comprises
   a first horizontal stay unit extending outward of the vehicle width direction from the first side of the vehicle width direction at an upper edge portion of a front panel arranged under a windshield on a front face portion of the body,
   a first vertical stay unit arranged upward from a tip end portion of the first horizontal stay unit, and
   a first mount unit being connected to an upper end portion of the first vertical stay unit and holding a first electronic photographing device that photographs a first photographing area including a vehicle periphery at the first side of the vehicle width direction, and
the second digital side mirror comprises
   a protruding unit extending forward of the vehicle from the second side of the vehicle width direction at the upper edge portion of the front panel on the front face portion of the body,
   a second horizontal stay unit extending outward of the vehicle width direction from a front end portion of the protruding unit,
   a second vertical stay unit arranged upward from a tip end portion of the second horizontal stay unit, and
   a second mount unit being connected to an upper end portion of the second vertical stay unit and holding a second electronic photographing device that photographs a second photographing area including a vehicle periphery at the second side of the vehicle width direction, and
the protruding unit, the second horizontal stay unit, the second vertical stay unit and the second mount unit of the second digital side mirror are formed to look like symmetrical to the first horizontal stay unit, the first vertical stay unit and the second mount unit of the first digital side mirror in a front view.

### [Appendix 2]

The digital side mirror structure according to appendix 1, wherein
the first horizontal stay unit has a cross section intersecting with an extending direction thereof, the cross section having an upper face forming a first inclined face inclined upward from a front end to a rear end along a vehicle front-rear direction,
the protruding unit has a cross section intersecting with an extending direction thereof, the cross section having an upper face forming a second inclined face inclined upward from an inside of the vehicle to an outside of the vehicle along the vehicle width direction, and
the second horizontal stay unit has a cross section intersecting with an extending direction thereof, the cross section having an upper face forming an inclined face similar to the first incline face.

### [Appendix 3]

The digital side mirror structure according to appendix 1 or 2, wherein
the first mount unit and the second mount unit are detachably connected to the respective upper end portions of the first vertical stay unit and the second vertical stay unit, respectively.

### [Appendix 4]

The digital side mirror structure according to any one of appendices 1-3 wherein
connecting portions between the first mount unit and the upper end portion of the first vertical stay unit and between the second mount unit and the upper end portion of the second vertical stay unit comprise
mechanical connecting mechanisms that mechanically connect the first mount unit and the second mount unit to the respective corresponding upper end portions, and
electrical connecting mechanisms that transmit image information that the first electronic photographing device and the second photographing device photograph to an entity in the vehicle.

### [Appendix 5]

The digital side mirror structure according to any one of appendices 1-4, wherein
the first photographing device photographs the first photographing area including a front side and a rear side of the vehicle on the first side of the vehicle width direction and the driver's seat, and
the second photographing device photographs the second photographing area including a front side and a rear side of the vehicle on the second side of the vehicle width direction, a portion under the front face portion of the body and the driver's seat.

### [Reference Signs List]

- 1: Truck (Vehicle)
- 3: Cab
- 3A: Front panel
- 3B: Windshield
- 3C: Roof panel
- 3L,3R: Front pillar
- 5: Wheel
- 6L: Navigator's seat
- 6R: Driver's seat
- 7: Door
- 9: Camera (Electronic photographing device)
- 9R: Camera (First electronic photographing device)
- 9L: Camera (Second electronic photographing device)
- 9A: Case
- 9F: Lens
- 10: digital side mirror structure
- 10R: First digital side mirror
- 10L: Second digital side mirror
- 11L,11R: Base unit
- 12R: First mount unit
- 12L: Second mount unit
- 13R: First horizontal stay unit
- 13L: Second horizontal stay unit
- 14R: First vertical stay unit
- 14L: Second vertical stay unit
- 15: Protruding unit
- 16: Upper face
- 16A: Front end
- 16B: Rear end
- 17: Lower face
- 17A: Front end
- 17B: Rear end
- 18: Upper face
- 18A: Inner end
- 18B: Outer end
- 19: Lower face
- 19A: Inner end
- 19B: Outer end
- 20: Connecting portion
- 21: Upper end portion
- 22: Protruding portion
- 23: Lower end portion
- 24: Recessed portion

## Claims

1. A digital side mirror structure, arranged in front of a driver's seat and on a body of a vehicle, comprising
a first digital side mirror arranged at a side of the driver's seat serving as a first side of a vehicle width direction; and
a second digital side mirror arranged at a side of the navigator's seat serving as a second side of the vehicle width direction, wherein
the first digital side mirror comprises
a first horizontal stay unit extending outward of the vehicle width direction from the first side of the vehicle width direction at an upper edge portion of a front panel arranged under a windshield on a front face portion of the body,
a first vertical stay unit arranged upward from a tip end portion of the first horizontal stay unit, and
a first mount unit being connected to an upper end portion of the first vertical stay unit and holding a first electronic photographing device that photographs a first photographing area including a vehicle periphery at the first side of the vehicle width direction, and
the second digital side mirror comprises
a protruding unit extending forward of the vehicle from the second side of the vehicle width direction at the upper edge portion of the front panel on the front face portion of the body,
a second horizontal stay unit extending outward of the vehicle width direction from a front end portion of the protruding unit,
a second vertical stay unit arranged upward from a tip end portion of the second horizontal stay unit, and
a second mount unit being connected to an upper end portion of the second vertical stay unit and holding a second electronic photographing device that photographs a second photographing area including a vehicle periphery at the second side of the vehicle width direction, and
the protruding unit, the second horizontal stay unit, the second vertical stay unit and the second mount unit of the second digital side mirror are formed to look like symmetrical to the first horizontal stay unit, the first vertical stay unit and the second mount unit of the first digital side mirror in a front view.

2. The digital side mirror structure according to claim 1, wherein
the first horizontal stay unit has a cross section intersecting with an extending direction thereof, the cross section having an upper face forming a first inclined face inclined upward from a front end to a rear end along a vehicle front-rear direction,
the protruding unit has a cross section intersecting with an extending direction thereof, the cross section having an upper face forming a second inclined face inclined upward from an inside of the vehicle to an outside of the vehicle along the vehicle width direction, and
the second horizontal stay unit has a cross section intersecting with an extending direction thereof, the cross section having an upper face forming an inclined face similar to the first incline face.

3. The digital side mirror structure according to claim 1, wherein
the first mount unit and the second mount unit are detachably connected to the respective upper end portions of the first vertical stay unit and the second vertical stay unit, respectively.

4. The digital side mirror structure according to claim 3 wherein
connecting portions between the first mount unit and the upper end portion of the first vertical stay unit and between the second mount unit and the upper end portion of the second vertical stay unit comprise
mechanical connecting mechanisms that mechanically connect the first mount unit and the second mount unit to the respective corresponding upper end portions, and
electrical connecting mechanisms that transmit image information that the first electronic photographing device and the second photographing device photograph to an entity in the vehicle.

5. The digital side mirror structure according to claim 1, wherein
the first photographing device photographs the first photographing area including a front side and a rear side of the vehicle on the first side of the vehicle width direction and the driver's seat, and
the second photographing device photographs the second photographing area including a front side and a rear side of the vehicle on the second side of the vehicle width direction, a portion under the front face portion of the body and the driver's seat.
